# EUROPÄISCHE PATENTANMELDUNG

(11) **EP 3 370 215 A1**
(43) Veröffentlichungstag der Anmeldung: **05.09.2018**
(21) Anmeldenummer: 18155791.9
(22) Anmeldetag: 08.02.2018
(51) Int. Cl.: G08G 1/095, G06K 9/00

(54) **VORRICHTUNG ZUM ERZEUGEN VON EINEM ODER MEHREREN DURCH MASCHINELLE ERKENNUNGSSYSTEME IDENTIFIZIERBAREN LICHTSIGNALEN UND VERFAHREN ZUR IDENTIFIKATION VON EINEM ODER MEHREREN LICHTSIGNALEN**

(30) Priorität: 01.03.2017 DE 102017203300
(71) Anmelder: Siemens Aktiengesellschaft, 80333 München (DE)
(72) Erfinder: Birkner, Leonhard, 80333 München (DE); Hobohm, Daniel, 80469 München (DE)

(57) **Zusammenfassung**

Die Erfindung betrifft eine Vorrichtung zum Erzeugen von einem oder mehreren durch maschinelle Erkennungssysteme identifizierbaren Lichtsignalen, aufweisend mindestens eine Lichtsignalanlage mit einem Gehäuse, mindestens eine in dem Gehäuse angeordnete, mit einer lichtdurchlässigen Scheibe versehenen Öffnung und mindestens eine in dem Gehäuse angeordnete Lichtquelle, wobei in einem Strahlengang der mindestens einen Lichtquelle ein polarisierender Filter zum Erzeugen von mindestens einer für Menschen nicht wahrnehmbarer Information angeordnet ist. Des Weiteren betrifft die Erfindung ein Verfahren zur Identifikation von einem oder mehreren Lichtsignalen durch mit maschinellen Erkennungssystemen ausgestattete Fahrzeuge.

## Beschreibung

Die Erfindung betrifft eine Vorrichtung zum Erzeugen von einem oder mehreren durch maschinelle Erkennungssysteme identifizierbaren Lichtsignalen, sowie ein Verfahren zur Identifikation von einem oder mehreren Lichtsignalen.

Voraussetzung für hochautomatisiertes und autonomes Fahren ist eine zuverlässige Erkennung der Umgebung durch das Fahrzeug. Eine besondere Herausforderung für maschinelle Erfassungssysteme in Fahrzeugen sind hierbei Lichtsignalanlagen, da sich die Lichtsignale an unterschiedlichen Orten befinden und in unterschiedlicher Kombination gestaltet sein können. Zudem können die Lichtsignale permanent leuchtend oder blinkend betrieben werden. Ein Lernprozess der Erkennungssysteme ist somit nur schwer möglich. Dies ist insbesondere vor dem Hintergrund der Verwendung von neuronalen Netzwerken für selbstfahrende Fahrzeuge problematisch, da mehr Variablen berücksichtigt werden müssen. Oft sind für derartig ausgerüstete Fahrzeuge Werbeplakate oder Rücklichter anderer Fahrzeuge nur schwer von den Signalen einer Lichtsignalanlage zu unterscheiden. Wechselnde Lichtverhältnisse und Sonneneinstrahlung lassen die Farben von Lichtsignalanlagen stets unterschiedlich wirken. Hinzu kommen eine oft von Land zu Land unterschiedliche Ausrichtung von Lichtsignalanlagen, die beispielsweise auch quer angebracht sein können, sowie wetterbedingte Einflüsse wie starker Wind, der Lichtsignalanlagen zum Teil in eine schwankende Bewegung versetzt. Bereits bekannte Systeme wie die Car2X-Technologie bieten hierfür technische Lösungen, diese sind jedoch aufwändige und komplex. Eine entsprechende Nachrüstung von Lichtsignalanlagen und Fahrzeugen ist durch die extra notwendigen Sende- und Empfangsvorrichtungen für Funksignale schwierig und mit hohen Kosten verbunden.

Aus der WO 2014/051417 A1 ist ein System mit einer Lichtsignalanlage dargestellt. Die Lichtsignalanlage weist unterschiedliche geometrisch geformte Lichterzeugungsvorrichtungen auf. Damit farbenblinde Menschen die unterschiedlichen Farben der Lichtsignalanlage korrekt deuten können, sind Lichterzeugungsvorrichtungen unterschiedlicher Farben mit unterschiedlich ausgerichteten Strichmustern versehen.

Der Erfindung liegt die Aufgabe zugrunde, eine Vorrichtung zum Erzeugen von Lichtsignalen vorzuschlagen, die neben einer Farbe mindestens ein weiteres nur durch maschinelle Erkennungssysteme identifizierbares Merkmal aufweisen. Des Weiteren liegt der Erfindung die Aufgabe zugrunde, ein Verfahren zur maschinellen Identifikation von mindestens einem Lichtsignal vorzuschlagen, dass durch eine derartige Vorrichtung erzeugt wird.

Gelöst wird die Aufgabe durch den Gegenstand des unabhängigen Patentanspruchs 1 und durch den Gegenstand des unabhängigen Patentanspruchs 11. Vorteilhafte Ausgestaltungen der Erfindung sind Gegenstand von jeweils abhängigen Unteransprüchen.

Nach einem Aspekt der Erfindung wird eine Vorrichtung zum Erzeugen von einem oder mehreren durch maschinelle Erkennungssysteme identifizierbaren Lichtsignalen mittels einer Lichtsignalanlage bereitgestellt. Die Lichtsignalanlage weist ein Gehäuse mit mindestens einer in dem Gehäuse angeordneten, mit einer Scheibe versehenen Öffnung auf. Des Weiteren weist die Lichtsignalanlage mindestens eine in dem Gehäuse angeordnete Lichtquelle auf, wobei in einem Strahlengang der mindestens einen Lichtquelle ein polarisierender Filter zum Erzeugen von mindestens einer für Menschen nicht wahrnehmbaren Information angeordnet ist.

Durch die beschriebene Vorrichtung ist es möglich, dass einem meist farbig in rot, gelb oder grün ausgestaltetes Lichtsignal eines Lichtsignalgebers der Lichtsignalanlage, bestehend aus einer Lichtquelle, einem Reflektor, einer lichtdurchlässigen Scheibe und einem polarisierenden Filter, neben dem für den Fahrer sichtbaren farbigen Licht ein weiteres, für den Menschen ohne technische Hilfsmittel nicht wahrnehmbares Erkennungsmerkmal hinzugefügt werden kann. Hierdurch entsteht eine Redundanz für die Informationsübertragung und die Identifizierung einer Phase oder eines Zustandes der Lichtsignalanlage. Ein in dem Strahlengang der Lichtquelle angeordneter polarisierender Filter ermöglicht, dass dem farbigen Lichtsignal mindestens eine weitere Information zur exakten Identifikation, insbesondere für automatisierte und autonome Fahrzeuge mit maschinellen Erkennungssystemen, zugeordnet werden kann. Das durch den Filter definiert polarisierte Licht ist für das menschliche Auge nicht wahrnehmbar und stellt somit für Fahrer in nicht-autonomen Fahrzeugen, Fußgängern oder Fahrradfahrern kein erkennbares Signal dar. Die bereits bestehenden Lichtsignalanlagen müssen somit nicht umgebaut oder umständlich geprüft bzw. verkehrstechnisch zugelassen werden. Die Vorrichtung ermöglicht bei einer festgelegten und allgemein gültigen Zuordnung einer bestimmten Polarisation für ein bestimmtes Lichtsignal automatisierten und autonomen Fahrzeugen eindeutig zu unterscheiden, ob es sich bei dem vermeintlichen Lichtsignal beispielsweise um eine Reklametafel oder um ein Lichtsignal einer Lichtsignalanlage handelt. Dies bedeutet insbesondere eine Verbesserung der Genauigkeit von automatisierten und autonomen Fahrzeugen sowie Fahrerassistenzsystemen. Fahrzeuge im Sinne der Erfindung können autonome, teil- oder nicht-autonome Personenkraftwagen, Busse, Straßenbahnen, Züge und dergleichen sein. Die erlangten und ausgewerteten Informationen der Phase oder des Zustandes einer Lichtsignalanlage können außerdem dazu genutzt werden um den Fahrer passiv oder aktiv zu benachrichtigen oder aufmerksam zu machen. Beispielsweise kann so verhindert werden, dass eine Grün-Phase auf einer benachbarten Spur falsch gedeutet wird, sodass trotz einer tatsächlichen Rot-Phase der Lichtsignalanlage eine Kreuzung überquert wird. In diesem Fall könnte der Fahrer durch ein akustisches oder optisches Signal gewarnt oder automatisch ein Bremsvorgang eingeleitet werden. Hierdurch kann die Vorrichtung eine erhebliche Verbesserung der Fahrsicherheit für den Fahrer und die Umgebung darstellen.

Gemäß einem Ausführungsbeispiel der Vorrichtung weist jeder Signalgeber der Lichtsignalanlage einen polarisierenden Filter mit einer gegenüber den benachbarten Signalgebern unterschiedlichen Polarisationsrichtung auf. Dies kann beispielsweise durch eine verdrehte Ausrichtung der polarisierenden Filter realisiert werden. So kann beispielsweise die Rot-Phase zusätzlich zu einer roten Farbe das Erkennungsmerkmal einer horizontalen Polarisation aufweisen. Hierbei könnte die Grün-Phase beispielsweise durch eine senkrechte Polarisation und eine Gelb-Phase durch eine zirkulare Polarisation oder durch eine um 45° gegenüber der senkrecht polarisierten Grün-Phase verdrehte Polarisation eindeutig identifizierbar gemacht werden. Die Vorrichtung erzeugt hierdurch neben den unterschiedlichen farbigen Lichtsignalen für jeden aus einem Signalgeber der Lichtsignalanlage gesendeten Strahlengang eine spezifische Polarisierung, die deutlich von den benachbarten polarisierten Strahlengängen mit technische Hilfsmittel, wie beispielsweise maschinelle Erkennungssysteme von Fahrzeugen, unterscheidbar ist. Die Polarisationsrichtung könnte beispielsweise mit einem Analysator detektiert werden. Dies führt dazu, dass auch bei einem Aufeinandertreffen vieler Lichtsignalanlagen auf Straßenkreuzungen oder an Bahnübergängen jeder Lichtsignalgeber einen Lichtstrahl bzw. ein Lichtsignal mit einer individuellen Polarisationsrichtung aussendet. Gleiche Lichtsignale können hierbei immer identische und zuvor festgelegte Polarisationsrichtungen aufweisen, so dass eine allgemein gültige und eindeutige Zuordnung eines Signalzustandes bzw. einer Phase der Lichtsignalanlage für Fahrzeuge mit maschinellen Erkennungssystemen modellunabhängig möglich ist.

Gemäß einem Ausführungsbeispiel der Vorrichtung ist der polarisierende Filter vor oder hinter der Scheibe angebracht. Dies ermöglicht sowohl eine Montage innerhalb des Gehäuses der Lichtsignalanlage als auch eine Befestigung des polarisierenden Filters außerhalb des Gehäuses. Die Montage innerhalb des Gehäuses bietet dem polarisierenden Filter zusätzlichen Schutz vor Witterungseinflüssen, wie Nässe oder UV Strahlung. Des Weiteren kann so ein unbefugtes Demontieren oder Beschädigen des polarisierenden Filters unterbunden werden. Die Anbringung des polarisierenden Filters außerhalb des Gehäuses der Lichtsignalanlage ermöglicht hingegen während der Fertigung der Lichtsignalanlage, aber auch nachträglich eine schnelle und einfache Möglichkeit einen polarisierenden Filter anzubringen.

Gemäß einem weiteren Ausführungsbeispiel der Vorrichtung kann der polarisierende Filter auch integral in die Scheibe eingebracht sein. Hierbei kann die Positionierung des polarisierenden Filters bereits bei der Herstellung der lichtdurchlässigen Scheiben einer Lichtsignalanlage erfolgen. Der polarisierende Filter kann beispielsweise bei der Herstellung auf die lichtdurchlässige Scheibe aufgeklebt oder aufgedampft werden. Dabei kann zu jeder Farbe einer Scheibe eine bestimmte Polarisationsrichtung mit allgemeiner Gültigkeit definiert werden. Somit können polarisierende Filter in grünen Scheiben von Lichtsignalanlagen eine bestimmte Polarisationsrichtung aufweisen, während polarisierende Filter in roten Scheiben eine andere Polarisationsrichtung zeigen. Maschinellen Erkennungssystemen in Fahrzeugen ist es hierdurch möglich Lichtsignale mit einer bestimmten Polarisation eindeutig einem bestimmten Lichtsignalgeber zuzuordnen, so dass die Gefahr von Verwechslungen der Lichtsignale reduziert wird.

Gemäß einem weiteren Ausführungsbeispiel der Vorrichtung kann der polarisierende Filter auf die Scheibe geklebt, hinter oder vor die Scheibe geklemmt, geschraubt, eingeklebt oder eingeschoben werden. Die Art der Befestigung des polarisierenden Filters in der Vorrichtung kann somit auf verschiedene Arten erfolgen. Eine besonders einfache Variante zum Nachrüsten einer bestehenden Lichtsignalanlage bietet das Einkleben eines polarisierenden Filters auf die lichtdurchlässige Scheibe. Hierbei kann der polarisierende Filter in Form einer klebenden Folie bzw. eines Aufklebers ausgeführt sein. Alternativ kann der polarisierende Filter beispielsweise einen Rahmen aufweisen, der sich in oder an der Öffnung oder an der lichtdurchlässigen Scheibe verschraubbar oder verkantbar ist. Hierbei kann das Verkanten beispielsweise reibschlüssig erfolgen. Eine weitere Möglichkeit besteht darin, den polarisierenden Filter an seinem Rahmen an das Gehäuse zu kleben oder mit diesem formschlüssig zu verrasten. Ein entsprechender polarisierender Filter kann somit einen Rahmen mit Rastnasen, einem Gewinde, einem Bajonett-Verschluss oder dergleichen aufweisen. Der polarisierende Filter kann auch in Form einer klebenden Folie auf einen Rahmen im Gehäuse oder auf das Gehäuse selbst geklebt werden. Hierbei kann der polarisierende Filter einen Überlappungsbereich aufweisen, der klebbar, klemmbar oder verschraubbar sein kann. Zudem kann der polarisierende Filter sowohl vor der Scheibe als auch hinter der Scheibe angebracht werden.

Gemäß einem weiteren Ausführungsbeispiel der Vorrichtung weist der polarisierende Filter mindestens eine Kodierung als mindestens eine für Menschen nicht wahrnehmbaren Information auf. Die Vorrichtung sendet somit zusätzlich zu dem ausgesendeten farbigen und polarisierten Lichtsignals ein weiteres, bevorzugterweise nur mit technischen Mittel erfassbares Merkmal bzw. erfassbare Information zur eindeutigen Identifikation aus, welches von Fahrzeugen mit maschinellen Erkennungssystemen genutzt werden kann. Für das menschliche Auge ist die Kodierung nicht sichtbar ausgestaltet. Die Kodierung sollte hierbei eine allgemeine Gültigkeit haben, so dass unabhängig vom Modell des Fahrzeuges die Kodierung erkannt werden kann und ein größtmöglicher Nutzen im Straßenverkehr entsteht. Dabei können verschiedene Kodierungen auch explizit nur für einige Verkehrsteilnehmer gesondert nutzbar sein, beispielsweise für öffentlichen Verkehrsmitteln oder Rettungsfahrzeugen.

Gemäß einem weiteren vorteilhaften Ausführungsbeispiel der Vorrichtung handelt es sich bei der Kodierung auf dem polarisierenden Filter um mindestens ein Zeichen, eine Figur und/oder ein Symbol. Hierbei kann jedem Lichtsignal einer bestimmten Lichtsignalanlage eine individuelle Kodierung zugeordnet werden, um eine exakte Identifizierungsmöglichkeit zu bieten. Die von Fahrzeugen erlangten Daten können hierbei beispielsweise in einer "Cloud" gesammelt und für andere Verkehrsteilnehmer zugreifbar gemacht werden. Durch die exakte Identifizierungsmöglichkeit jedes einzelnen Lichtsignals einer Lichtsignalanlage können beispielsweise auch bei einem durch Wind verursachten Schwanken der Lichtsignalgeber auf die gesammelten Daten zurückgegriffen werden, so dass trotz schlechter Bedingung eine exakte Bestimmung eines individuellen Lichtsignals einer bestimmten Lichtsignalanlage möglich ist. Die Kodierung kann beispielsweise in Form von Zeichen, Buchstaben, Zahlen und dergleichen erfolgen, die alleine oder in Kombination für ein Erkennungssystem erkennbar sind, wenn das entsprechende mit dem polarisierenden Filter versehene Lichtzeichen aktiviert ist. Die Zeichen können auf einen polarisierend Filter, der den Strahlengang der Lichtquelle vollständig oder teilweise verdecken kann, angebracht und beispielsweise länderspezifisch ausgeführt sein. Es ist des Weiteren möglich bestimmte Zeichenfolgen oder Zeichenkombinationen zu verwenden, die maschinell zugeordnet werden können.

Gemäß einem weiteren Ausführungsbeispiel der Vorrichtung kann die Kodierung auch durch eine bestimmte Form des polarisierenden Filters erfolgen. Hierbei kann der polarisierende Filter eine individuell für ein bestimmtes Lichtsignal einer Lichtsignalanlage bestimmte, gewählte Form aufweisen. Darüber hinaus kann die Form des polarisierenden Filters beispielsweise abhängig von der Farbe des Lichtsignals, der Straße, der Geschwindigkeitsbegrenzung oder anderer Kriterien gewählt werden. Der polarisierende Filter kann sowohl symbolförmige Ausschnitte aufweisen als auch selbst symbolförmig ausgeführt sein. So kann beispielsweise der polarisierende Filter rechteckig, rund oder dreieckig ausgeführt sein und auf die lichtdurchlässige Scheibe aufgeklebt werden. Alternativ kann ein derartiger symbolförmiger polarisierender Filter auch Bestandteil einer Folie oder eines Glas- bzw. Kunststoffscheibe sein, die an die lichtdurchlässige Scheibe angebracht werden kann. Die polarisierenden Filter können bei unterschiedlichen Lichtsignalen bzw. Lichtsignalgebern gleiche oder unterschiedliche Polarisationsrichtungen aufweisen. Bei unterschiedlichen Polarisationsrichtungen kann somit eine zusätzliche Information gewonnen werden, was die Wahrscheinlichkeit einer eindeutigen Identifikation steigert.

Gemäß einem weiteren Ausführungsbeispiel der Vorrichtung handelt es sich bei der einen, die mindestens eine Öffnung im Gehäuse der Lichtsignalanlage verschließenden Scheibe um eine Streuscheibe. Insbesondere für ältere Lichtsignalanlagen bietet eine Streuscheibe größtmöglichen Blickwinkel und optimale Erkennbarkeit. Dies schließt jedoch moderne Anlagen mit LED-Technik, Halogenlampen sowie OLED nicht aus, welche älteren Lichtsignalanlagen immer mehr ersetzen. Die lichtdurchlässige Scheibe kann in diesem Fall eine normale Glasscheibe, Plexiglasscheibe oder Ähnliches sein. Die Streuscheibe kann auch eine Wölbung aufweisen. Eine derartige Wölbung kann beispielsweise dazu genutzt werden einen Einsatz bzw. einen entsprechend geformten Rahmen mit einem polarisierenden Filter zu befestigen.

Gemäß einem weiteren Ausführungsbeispiel der Vorrichtung kann die Scheibe farbig oder farblos ausgeführt sein. Für den allgemeinen Straßenverkehr werden häufig Lichtsignalanlagen mit rot-, gelb- oder grün gefärbten Scheiben verwendet. Für andere Verkehrsteilnehmer, zum Beispiel den öffentlichen Nahverkehr, insbesondere bei Buslinien, werden häufig auch farblose Scheiben verwendet. Der Einsatz der Vorrichtung ist insbesondere im Bereich von öffentlichem Personennahverkehr denkbar, da aufgrund des hohen Person Aufkommens übersehene Lichtzeichen schnell zu Personenschäden führen können. Durch die Vorrichtung kann somit die Sicherheit Fahrgästen und Personen im Umfeld des Fahrzeuges verbessert werden. Dabei kann das von der Vorrichtung gesendete Lichtsignal sowohl von einem automatisierten und autonomen Fahrzeug als auch vom einen Fahrassistenzsystem genutzt werden. So kann beispielsweise ein versehentliches Anfahren unterbunden werden, solange entsprechende Freigabe-Lichtsignalgeber deaktiviert sind.

Nach einem weiteren Aspekt der Erfindung wird ein Verfahren zur Identifikation von einem oder mehreren Lichtsignalen bereitgestellt. Von einer Vorrichtung wird mindestens ein mit maschinellen Erkennungssystemen identifizierbares Lichtsignal mit polarisiertem Licht und/oder mindestens einer Kodierung eines polarisierenden Filters erzeugt. Die Polarisierung des erzeugten Lichts und/oder die mindestens eine Kodierung durch den polarisierenden Filter stellt dabei mindestens eine für Menschen nicht wahrnehmbare Information dar, welche parallel zum Licht der Vorrichtung erzeugt wird. Durch das maschinelle Erkennungssystem wird das polarisierte Licht und/oder mindestens eine Kodierung des polarisierenden Filters bzw. die mindestens eine Information maschinell erkannt und einem spezifischen Lichtsignal zugeordnet. Durch das Verfahren ist es möglich neben einer farbigen Ausgestaltung mindestens eines Lichtsignals einer Lichtsignalanlage zusätzliche und für Menschen nicht sichtbare Erkennungsmerkmale bzw. Identifizierungsmerkmale für ein eindeutiges Identifizieren einer Phase bzw. eines Zustandes einer Lichtsignalanlage durch maschinelle Erkennungssysteme bereitzustellen. Es kann beispielsweise eine bestimmte Polarisationsrichtung bzw. Ausrichtung eines oder mehrere polarisierender Filter dazu genutzt werden eine bestimmte Phase der Lichtsignalanlage automatisiert oder autonom durch ein maschinelles Erkennungssystem eines Fahrzeuges zu erkennen und einzuordnen. Hierdurch können beispielsweise Rot-Phasen einer Lichtsignalanlage deutlicher von Rücklichtern vorausfahrender Fahrzeuge unterschieden werden.

Gemäß einem Ausführungsbeispiel des Verfahrens werden die mindestens eine einem spezifischen Lichtsignal zugeordnete mindestens eine für Menschen nicht wahrnehmbare Information an einen Computer des automatisierten oder autonomen Fahrzeuges oder an den Fahrer des Fahrzeuges in Form eines Signals oder einer Information weitergeleitet. Hierdurch werden eine Kodierung und/oder eine bestimmte Polarisationsrichtung eines Lichtsignals registriert und an den Computer weitergeleitet. Der Computer kann diese Daten auswerten und den Fahrer unterstützen oder sogar in bestimmte Funktionen des Fahrzeuges eingreifen. Beispielsweise kann der Fahrer eines Fahrzeuges bei einem Heranfahren an eine rote Ampel bzw. Lichtsignalanlage über den Zustand der Lichtsignalanlage gewarnt werden und bei Unterschreitung eines Abstandes zu der Lichtsignalanlage entweder akustisch oder optisch gewarnt oder durch einen Bremsvorgang vor einem Überfahren der roten Ampel geschützt werden. Hierbei kann auch ein kurzzeitiges Abbremsen als ein Warnsignal ebenfalls initiiert werden. Alternativ oder zusätzlich können die identifizierbaren Lichtsignale von einem beliebigen tragbaren Gerät erkannt und weiterverarbeitet werden. Beispielsweise können sehbeeinträchtigte Fußgänger durch ein tragbares Gerät Warnsignale in Form von Tonausgaben oder Schwingungen erhalten, die auf eine Phase der Lichtsignalanlage deuten. Tragbare Geräte können Smartphones oder Tabletts sein.

Gemäß einem weiteren Ausführungsbeispiel des Verfahrens werden für eine durch den Computer durchgeführte Auswertung eines oder mehrerer Lichtsignale Daten mindestens eines Sensors genutzt. Hierdurch können beispielsweise Messsensoren wie Entfernungssensoren, Geschwindigkeitssensoren und dergleichen für die Verarbeitung der Daten genutzt werden. Somit kann beispielsweise in Abhängigkeit von einem Abstand des Fahrzeuges zu einer Lichtsignalanlage das Fahrzeug abgebremst oder beschleunigt werden. Diese Vorgänge können auch Umweltbedingungen in die Verarbeitung implementieren, sodass bei bestimmten Außentemperaturen die Abstände angepasst werden können. Die Auswertung kann sowohl zur Darstellung von Informationen für den Fahrer als auch zur Steuerung eines automatisierten oder vollständig autonomen Fahrmanövers verwendet werden.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: einen schematischen Schnitt durch eine Vorrichtung zum Erzeugen von Lichtsignalen gemäß einem ersten Ausführungsbeispiel
- FIG 2: eine schematische, frontale Draufsicht auf die Vorrichtung zum Erzeugen von Lichtsignalen gemäß dem ersten Ausführungsbeispiel
- FIG 3: eine schematische, frontale Draufsicht auf die Vorrichtung zum Erzeugen von Lichtsignalen gemäß einem zweiten Ausführungsbeispiel
- FIG 4: eine schematische frontale Draufsicht auf die Vorrichtung zum Erzeugen von Lichtsignalen gemäß einem dritten Ausführungsbeispiel und
- FIG 5: eine schematische Darstellung einer Kreuzung mit zwei Vorrichtungen gemäß einem zweiten Ausführungsbeispiel.
In den Figuren weisen dieselben konstruktiven Elemente jeweils dieselben Bezugsziffern auf.

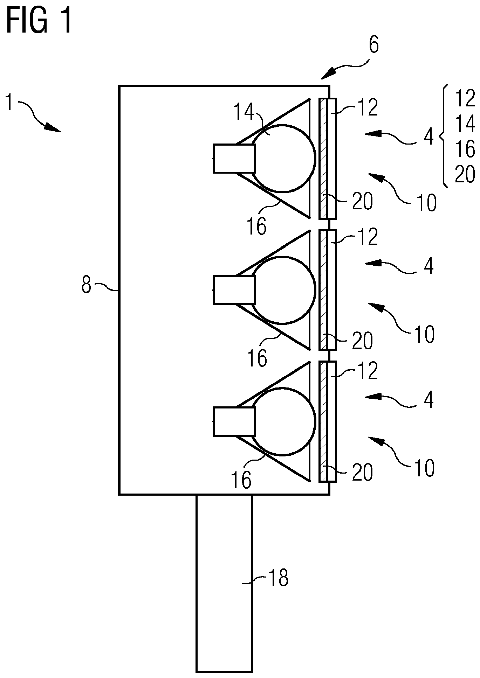

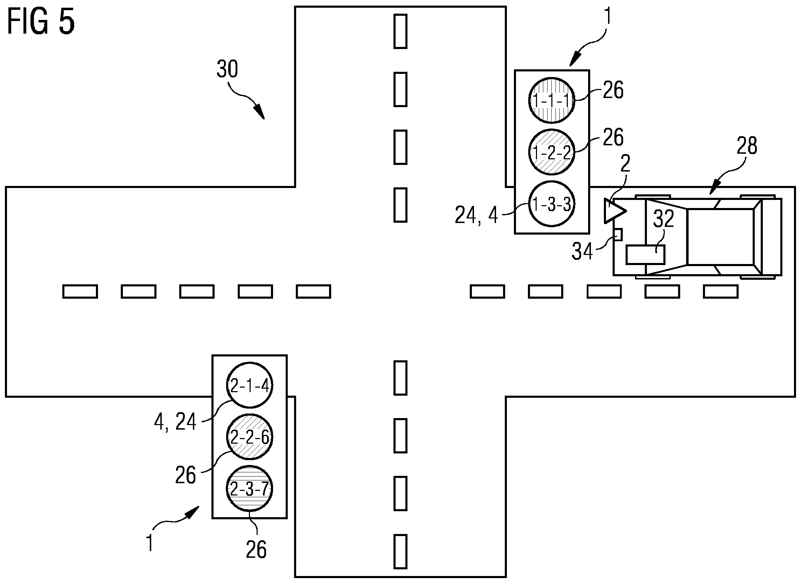

Die FIG 1 zeigt einen schematischen Schnitt durch eine Vorrichtung 1 zum Erzeugen von einem oder mehreren durch maschinelle Erkennungssysteme 2 identifizierbaren Lichtsignale 24 gemäß einem ersten Ausführungsbeispiel. Ein maschinelles Erkennungssystem 2 wird in Figur 5 näher beschrieben und dargestellt. Die Vorrichtung 1 weist hierbei eine Lichtsignalanlage 6 mit einem Gehäuse 8 auf. In das Gehäuse 8 sind drei Öffnungen 10 vorhanden, die jeweils mit einer lichtdurchlässigen Scheibe 12 verschlossen sind. Die lichtdurchlässigen Scheiben 12 sind gemäß dem Ausführungsbeispiel als Streuscheiben 12 ausgeführt und können aus Glas oder Kunststoff bestehen. In dem Gehäuse 8 ist hinter jeder lichtdurchlässigen Scheibe 12 jeweils eine Lichtquelle 14 mit jeweils einem Reflektor 16 angeordnet. Die Lichtquelle 14 ist gemäß dem Ausführungsbeispiel eine konventionelle Glühlampe 14, die jedoch auch in Form von mindestens einer LED ausgeführt sein kann. Ein Streuscheibe 12, eine Lichtquelle 14, ein Reflektor 16 und ein polarisierenden Filter 20 bilden zusammen einen Lichtsignalgeber 4. Der Lichtsignalgeber4 ist derart in bzw. an einer Öffnung 10 des Gehäuses 8 angeordnet, dass das Lichtsignal 24 aus dem Gehäuse 8 hinaus leuchten kann. Das Gehäuses 8 ist üblicherweise mit einer nicht gezeigten Halterung versehen und wird üblicherweise entweder hängend oder an oder auf einem Pfahl 18 montiert. In dem Gehäuse 8 ist vor der lichtdurchlässigen Scheibe 12 im Strahlengang der Lichtquelle 14 ein polarisierender Filter 20 angeordnet. Der polarisierende Filter 20 wird vorzugsweise direkt in Form einer polarisierenden Folie auf eine gesamte Innenseite der Streuscheibe 12 geklebt und füllt die Streuscheibe 12 komplett aus. Alternativ kann der polarisierende Filter 20 in einem separaten nicht dargestellten Rahmen gespannt und vor die Streuscheibe 12 festgeschraubt, geklemmt, oder geklebt werden. Das von der Lichtquelle 14 erzeugbare Lichtsignal 24 wird somit bevor es das Gehäuse 8 der Lichtsignalanlage 6 verlässt mit einer bestimmten Polarisationsrichtung versehen, ohne dass für einen Verkehrsteilnehmer ohne technische Hilfsmittel das ausgesendeten Lichtsignal 24 eines Lichtsignalgebers 4 der Lichtsignalanlage 6 eine andere Erscheinung als üblich aufweist.

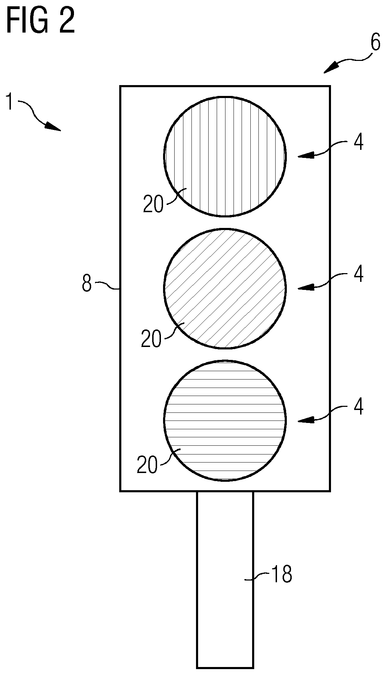

Die FIG 2 zeigt eine schematische, frontale Draufsicht auf die Vorrichtung 1 gemäß dem ersten Ausführungsbeispiel. Wie bereits in FIG 1 beschrieben, ist jede Öffnung 10 im Gehäuse 8 durch jeweils eine lichtdurchlässige Scheibe 12 verschlossen und mit einem polarisierenden Filter 20 versehen, wobei der polarisierende Filter 20 auf verschiedene Arten angebracht sein kann. Die Schraffuren verdeutlichen unterschiedliche Polarisationsrichtungen der polarisierenden Filter 20.

Deutlich zu erkennen ist, dass die unterschiedlich ausgerichteten polarisierenden Filter 20 jedes der drei Lichtsignalgeber 4 eindeutig charakterisieren können und dienen somit als ein zusätzliches Identifizierungsmerkmal. Jedes Lichtsignal 24 ist somit durch die unterschiedliche Polarisation eindeutig identifizierbar.

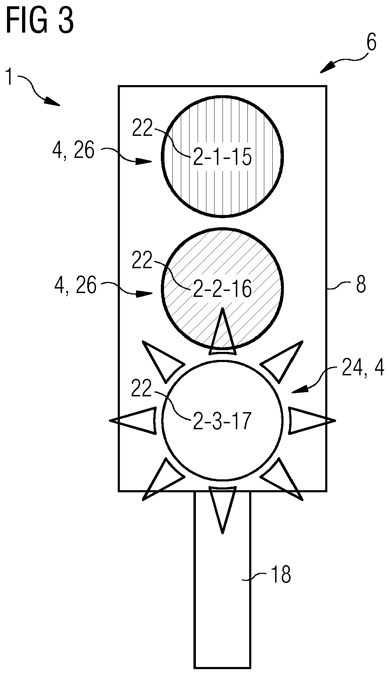

Die FIG 3 zeigt eine weitere schematische, frontale Draufsicht auf die Vorrichtung 1 gemäß einem zweiten Ausführungsbeispiel. Analog zum ersten Ausführungsbeispiel weisen die Lichtsignalgeber 4 unterschiedlich gerichtete polarisierende Filter 20 auf, die zur besseren Übersicht nicht dargestellt werden. Zusätzlich zu der Farbunterscheidung der Lichtsignalanlage 6 und der unterschiedlichen Polarisationsrichtungen, weist die Lichtsignalanlage 6 eine weitere Information zur Identifikation einer Phase oder eines Zustandes der Lichtsignalanlage 6 auf. Eine weitere Identifikationsmöglichkeit der jeweiligen Phase der Lichtsignalanlage 6 wird hier durch eine Kodierung 22 ermöglicht, die zusätzlich auf den polarisierenden Filter 20 aufgebracht ist. Im vorliegenden Ausführungsbeispiel handelt es sich dabei um eine Ziffern-Kombination 22, wobei jedem Lichtsignal 24 ein individueller Ziffern-Code zugeordnet ist. Nur wenn eine Lichtquelle 14 ein Lichtsignal 24 aktiv aussendet ist für Fahrzeuge mit maschinellen Erkennungssystemen die Kodierung 22, zusätzlich zu der Polarisationsrichtung des Lichtsignals 4, zu erkennen. Für maschinelle Erkennungssysteme 2 ist die Kodierung einfach erkennbar bzw. anlernbar und bietet somit eine verbesserte Unterscheidbarkeit und Identifizierbarkeit der unterschiedlichen Lichtsignale 24 und der Phasen zusätzlich zu den unterschiedlichen Farben, die je nach den Lichtverhältnissen anders wirken. Die inaktiven Lichtsignale 26 sind hierbei dunkel und das aktiv Lichtsignal 24 hell dargestellt.

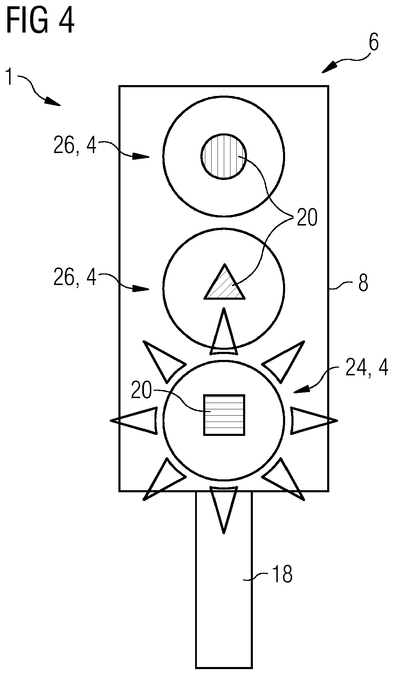

Die FIG 4 zeigt eine weitere schematische, frontale Draufsicht auf die Vorrichtung 1 gemäß einem dritten Ausführungsbeispiel. Dargestellt ist eine weitere Möglichkeit für eine Kodierung 22 eines Lichtsignals 4 einer Lichtsignalanlage 6.

Hierbei werden ebenfalls polarisierende Filter 20 mit unterschiedlichen Polarisationsrichtungen in die Strahlengänge verschiedener Lichtquellen 14 angeordnet. Die Kodierung 22 erfolgt dabei durch eine individuelle Form oder Symbolik des polarisierenden Filters 20 selbst. Dabei wird die Kodierung 22 für Fahrzeuge mit maschinellem Erkennungssystem 2 nur sichtbar, wenn der entsprechende Lichtsignalgeber 4 leuchtet und Licht polarisiert werden kann. Für andere Verkehrsteilnehmer bleibt die Optik der Lichtsignalanlage 6 sowie der ausgesendeten Lichtsignale 24 ohne technische Hilfsmittel unverändert. Gemäß dem Ausführungsbeispiel weisen die Lichtsignalgeber 4 für die Rot-Phase einen kreisförmigen polarisierenden Filter 22, für die Gelb-Phase einen dreieckigen und für die Grün-Phase einen rechteckig geformten polarisierenden Filter 20 auf. Die polarisierenden Filter 20 weisen gemäß dem Ausführungsbeispiel eine unterschiedliche Polarisationsrichtung auf. Alternativ können die polarisieren Filter 20 auch eine identische Polarisationsrichtung aufweisen.

Die FIG 5 zeigt eine schematische Darstellung einer Kreuzung mit zwei Vorrichtungen 1 gemäß jeweils einem zweiten Ausführungsbeispiel. Die FIG 5 dient zum Verdeutlichen des Verfahrens zur Identifikation von einem oder mehreren Lichtsignalen 24 durch mit maschinellen Erkennungssystemen 2 ausgestattete Fahrzeuge 28. Ein Fahrzeug 28 ist dargestellt, dass vor einer Kreuzung 30 hält. Die für das Fahrzeug 28 zuständige Vorrichtung 1 weist ein aktives Lichtsignal 24 für die Grün-Phase auf, sodass das maschinelle Erkennungssystem 2, welches als ein maschinelles Erkennungssystem 2 ausgeführt ist, die Kodierung "1-3-3" und eine entsprechende Polarisationsrichtung messen bzw. erkennen kann. Das Fahrzeug 28 weist zusätzlich zum maschinellen Erkennungssystem 2 mindestens einen Sensor 34 auf, der beispielsweise eine Temperatur oder eine Entfernung des Fahrzeuges 28 zu einer Lichtsignalanlage 6 messen kann. Ein Computer 32 wertet die gemessene Daten bzw. erkannte Polarisationsrichtung und Kodierung aus und kann anhand der Daten die Phase der Lichtsignalanlage 6 bzw. der Vorrichtung 1 identifizieren. Die so evaluierten Daten können in Form von Informationen an einen Fahrer des Fahrzeuges 28 weitergegeben werden oder für automatisierte bzw. semi-automatisierte Prozesse wie beispielsweise Notbremsassistent verwendet werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1) zum Erzeugen von einem oder mehreren durch maschinelle Erkennungssysteme (2) identifizierbaren Lichtsignalen (24), aufweisend mindestens eine Lichtsignalanlage (6) mit einem Gehäuse (8), mindestens eine in dem Gehäuse (8) angeordnete, mit einer lichtdurchlässigen Scheibe (12) versehenen Öffnung (10) und mindestens eine in dem Gehäuse (8) angeordnete Lichtquelle (14), **dadurch gekennzeichnet, dass** in einem Strahlengang der mindestens einen Lichtquelle (14) ein polarisierender Filter (20) zum Erzeugen von mindestens einer für Menschen nicht wahrnehmbaren Information angeordnet ist.

2. Vorrichtung nach Anspruch 1, wobei jede mit einer lichtdurchlässigen Scheibe (12) versehene Öffnung (10) der Lichtsignalanlage (6) einen polarisierenden Filter (20) mit einer gegenüber einer benachbarten Öffnung (10) unterschiedlichen Polarisationsrichtung aufweist.

3. Vorrichtung nach Anspruch 1 bis 2, wobei der polarisierende Filter (20) vor oder hinter der lichtdurchlässigen Scheibe (12) angeordnet ist.

4. Vorrichtung nach Anspruch 1 bis 3, wobei der polarisierende Filter (20) integral in die lichtdurchlässige Scheibe (12) eingebracht ist.

5. Vorrichtung nach Anspruch 1 bis 4, wobei der polarisierende Filter (20) auf die lichtdurchlässige Scheibe (12) geklebt, hinter oder vor die lichtdurchlässige Scheibe (12) geklemmt, eingeschraubt, eingeklebt oder eingeschoben ist.

6. Vorrichtung nach Anspruch 1 bis 5, wobei der polarisierende Filter (20) mindestens eine Kodierung (22) als mindestens eine für Menschen nicht wahrnehmbaren Information aufweist.

7. Vorrichtung nach Anspruch 6, wobei die Kodierung (22) mindestens ein Zeichen, eine Figur oder ein Symbol ist.

8. Vorrichtung nach Anspruch 6 oder 7, wobei die Kodierung (22) durch eine Form des polarisierenden Filters (20) erfolgt.

9. Vorrichtung nach Anspruch 1 bis 8, wobei die lichtdurchlässige Scheibe (12) eine Streuscheibe (12) ist.

10. Vorrichtung nach Anspruch 1 bis 9, wobei die lichtdurchlässige Scheibe (12) farbig oder farblos ausgeführt ist.

11. Verfahren zur Identifikation von einem oder mehreren Lichtsignalen (24) mit den folgenden Schritten:
- Erzeugen von mit maschinellen Erkennungssystemen identifizierbaren Lichtsignalen (24) mit einer Vorrichtung (1) nach einem der Ansprüchen 1 bis 10,
- Empfangen von mindestens einem identifizierbaren Lichtsignal (24) durch mindestens ein mit einem maschinellen Erkennungssystem (2) ausgestattetes Fahrzeug (28),
wobei durch das maschinelle Erkennungssystem (2) mindestens eine für Menschen nicht wahrnehmbare Information der Vorrichtung (1) maschinell erkannt und einem spezifischen Lichtsignal (24, 26) der Vorrichtung (1) zugeordnet wird.

12. Verfahren nach Anspruch 11, wobei die mindestens eine für Menschen nicht wahrnehmbare Information der Vorrichtung (1) polarisiertes Licht (26) und/oder mindestens eine Kodierung (22) eines polarisierenden Filters (20) ist und wobei die mindestens eine einem spezifischen Lichtsignal (24, 26) zugeordnete Information an einen Computer (32) des automatisierten oder autonomen Fahrzeuges (28) oder an den Fahrer des Fahrzeuges (28) in Form eines Signals oder einer Information weitergeleitet werden.

13. Verfahren nach Anspruch 11 oder 12, wobei für eine durch den Computer (32) durchgeführte Auswertung eines oder mehrerer Lichtsignale (24, 26) Daten mindestens eines Sensors (34) genutzt werden.
